# EUROPEAN PATENT SPECIFICATION

(11) **EP 2 464 905 B1**
(45) Date of publication and mention of the grant of the patent: **21.08.2013**
(21) Application number: 10734653.8
(22) Date of filing: 14.07.2010
(51) Int. Cl.: F16K 27/10

(54) **MANUFACTURING METHOD OF A VALVE**
VERFAHREN ZUR HERSTELLUNG EINES VENTILS
PROCÉDÉ DE FABRICATION D'UNE SOUPAPE

(30) Priority: 13.08.2009 DK 200900925
(43) Date of publication of application: 20.06.2012
(73) Proprietor: Danfoss A/S, 6430 Nordborg (DK)
(72) Inventor: HØYER, Jesper, Højland, DK-7100 Vejle (DK); PETERSEN, Hans, Kurt, DK-6040 Egtved (DK); BONDE, Erik, Thomas, DK-5250 Odense SV (DK); MORTENSEN, Ole, DK-6000 Kolding (DK)
(86) International application number: PCT/DK2010/000107
(87) International publication number: WO 2011/018087

(56) References cited:
- EP-A1- 1 911 999
- EP-A2- 1 132 672
- WO-A1-98/40260
- DE-B- 1 066 394

## Description

### FIELD OF THE INVENTION

The present invention relates to a method to manufacture a valve using metal injection moulding and welding the valve housing to the upper part of the valve without damaging the inner cavity of the valve housing.

### BACKGROUND OF THE INVENTION

A valve housing is usually manufactured by forging or turning or a combination of those. In a traditional forging process it is difficult to manufacture details inside the valve and often further adaption of the housing is necessary after the forging giving extra work and also expensive material is wasted. When manufacturing a valve typically soldering or screw joints are used to assemble the housing to the other parts of the valve.

Metal injection moulding (MIM) is a manufacturing method that at relatively low costs allows manufacturing parts effectively and precise. In the MIM process metal powder is mixed with a polymeric binder. The MIM material is heated and then injected in a mould. The part obtained after the injection moulding is slightly larger in size than the final part. The part then goes through a debinding process where about 90% of the polymeric binder is removed. Then the part is sintered to remove the majority of the remaining polymeric binder and the sintering also makes the metal powder to fuse together creating a solid part. The sintering also makes the part shrink to its final size.

A problem by MIM is that the walls of the part have to be relatively thin to allow the debinding process and the sintering to remove almost all the polymeric binder. Therefore making parts to be welded by using the MIM process is difficult because thin walls easy deforms during welding.

EP 1 911 999 A1 discloses a valve body and a valve seat with an axial central channel. The valve body is formed as a molded part, which is manufactured with a metal injection molding method.

WO 98/40260 A1 discloses a flux tube made of sections friction welded or laser welded together and then machined to a desired finish. The sections may be made as a metal injection molding.

### SUMMERY OF THE INVENTION

It is the object of the invention to manufacture a valve as cheap as possible using a minimum of material by using the MIM process.

It is further the object of the invention to avoid damage to the inner cavity of the valve when the valve housing is welded to the upper part of the valve.

The problem of using the MIM process is that the relatively thin walls often will deform during welding.

The invention provides a method for manufacturing a valve, the valve comprising a housing and an upper part, the housing is manufactured by metal injection moulding, the housing comprises an welding cap, and the upper part is welded to the welding cap.

Using metal injection moulding makes it possible to manufacture the housing cheap using a minimum of material since the waste of material is very limited. However there is a problem using metal injection moulding because the thickness of the walls must be limited to allow for the debinding process and the sintering process to remove almost all of the polymeric binder. If the walls are too thick it is difficult to remove almost all of the polymeric binder. Therefore the walls must be relatively thin compared with a housing manufactured in a traditional way. Thin walls give a problem when the housing is welded to the upper part as the welding can deform the housing making it difficult for the inner parts to move freely. Therefore a welding cap is added to the housing; the upper part is then welded to the welding cap, and deformation of the inner cavity of the housing is avoided.

A further advantage of using metal injection moulding is that the housing can be made in steel. Using the conventional manufacturing methods it is hard and expensive to make a housing in steel, therefore brass is often used for a housing since it is easier to work in brass. However to manufacture the housing in steel is easy using metal injection moulding, it is efficient and cheap using a minimum of material.

Metal injection moulding can also be used for other metals like ceramics, magnetic materials, and combinations of different materials in same part.

The housing comprises an inner liner and the inner liner end and the welding cap end are separated by a groove. The inner liner is defining the form of the inner cavity, the inner liner must be strait to keep the inner parts in place and avoid obstacles to the free movement of the inner parts. The inner liner and the welding cap are placed side by side separated by a groove. The groove makes some distance between the welding cap and the inner liner so heat from the welding cannot deform the inner liner.

There is a passage between the groove and the inner cavity so no pressure can build up in the groove during welding or during operation of the valve.

The end of the welding cap can be staggered compared to the end of the inner liner so the end of the inner liner is lower than the end of the welding cap avoiding the risk of the inner liner getting in contact with the upper part. Such a contact is unwanted since it might prevent a good contact between the welding cap and the upper part.

Further the upper part can comprise a guiding ring placed on the upper part so the guiding ring gets in contact with the inner edge of the welding cap. The guiding ring helps placing and keeping the valve housing and the upper part in correct position for the welding.

Preferable the housing is manufactured so all parts of the housing have a uniform thickness. This is done to ensure that the debinding process and the sintering remove almost all the polymeric binder. In the preferred embodiment all parts of the housing is about 1 mm. Of course in areas where different part meets the thickness can be a little larger.

After welding the depth of the welding seem should preferably be less than the thickness of the welding cap to avoid the risk of the inner liner is hit by molten material during welding risking deformation.

### BRIEF DESCRIPTION OF THE DRAWINGS

Fig. 1 shows a valve of the preferred embodiment of the valve.
Fig. 2 shows a 3-D drawing of the housing showing the welding cap and the inner liner of the invention.
Fig. 3 shows the housing seen from above.

### DETAILED DESCRIPTION OF THE DRAWINGS

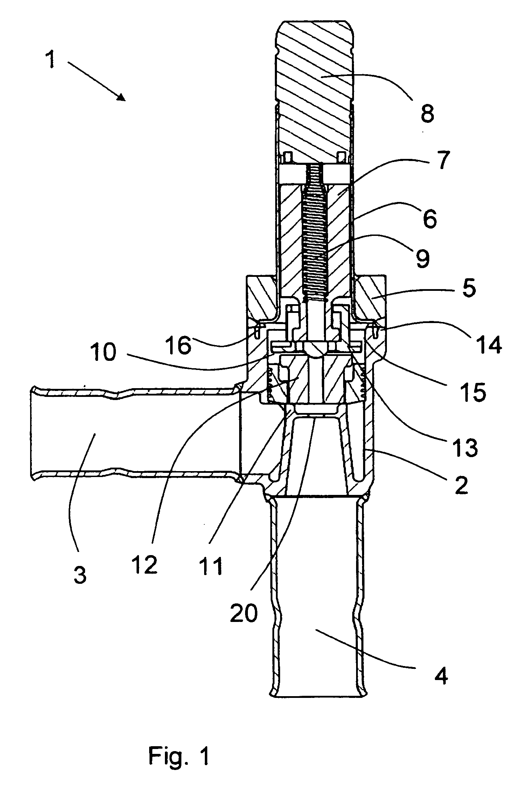

Fig. 1 shows the preferred embodiment of the invention. The valve 1 comprising a housing 2, an inlet 3, an outlet 4, and an upper part 5. To the upper part 5 is fixed a guiding tube 6, around the guiding tube 6 the valve comprises a solenoid, but this is not shown on the drawing. Inside the guiding tube 6 are an armature 7 and an armature top 8. A spring 9 keeps the valve closed when the armature 7 is not activated by the electromagnetic coil. The housing 2 comprises an inner cavity 10 and a valve seat 11 and the nozzle 20, in the inner cavity 10 is the inner parts comprising a servo piston 12 and a servo closure member 13. The housing further comprises a welding cap 14, an inner liner 15 and a groove 16, the groove 16 is placed between the welding cap 14 and the inner liner 15.

The servo closure member 13 moves up and down in the inner cavity 10. The servo closure member 13 is following the inner liner 15, therefore it is very important that the inner liner 15 is strait since bumps or other obstacles will hinder the free movement of the servo closure member 13. This is the main reason the welding must not deform the inner liner 15.

To make mounting easier the upper part 5 can have a guiding ring (now shown), the guiding ring meets the inner edge of the welding cap 14, so when the upper part 5 is placed on top of the housing 2, the guiding ring ensure the upper part 5 is placed in the right place for welding.

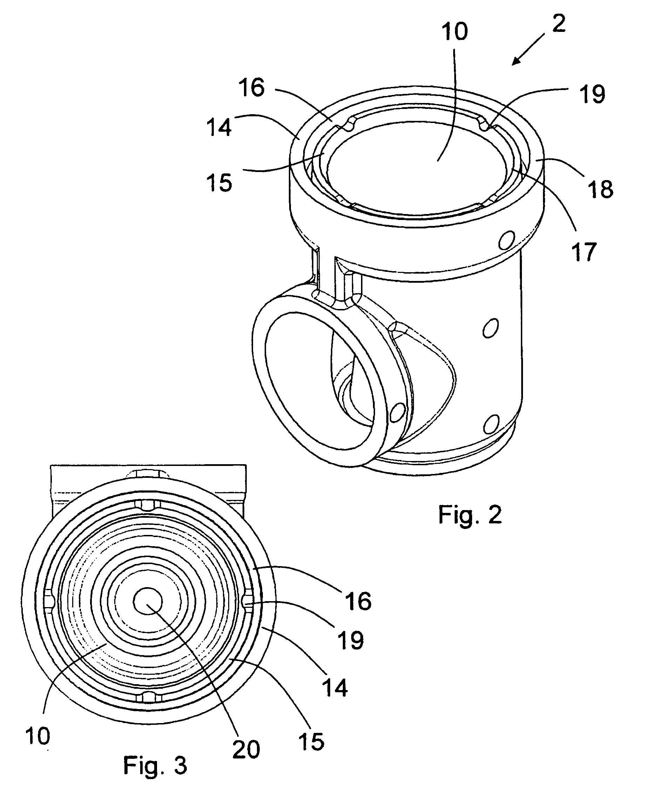

Fig. 2 shows the housing 2 in a 3-d drawing. There is the welding cap 14 and the inner liner 15 separated by the groove 16. The inner liner end 17 is staggered slightly lower than the welding cap end 18 so when the upper part 5 is placed on top of the housing 2 there is a small gap between the inner liner end 17 and the upper part 5. To be sure there is a free passage between the groove 16 and the inner cavity 10 there also can be made some leaks 19 in the inner liner 15.

Fig. 3 shows the housing 2 seen from above with the welding cap 14, the inner liner 15, the groove 16, the leaks 19, the inner cavity 10 and the nozzle 20. The size of the nozzle 20 can be increased by cutting, so the nozzle 20 can be made in varying sizes to fit the wanted characteristics of the valve.

## Claims

1. A method of manufacturing a valve, the valve comprising a housing (2) and an upper part (5), the housing (2) being manufactured by metal injection moulding, the housing (2) comprises a welding cap (14), and the upper part (5) is welded to the welding cap (14), **characterised in that** the housing (2) comprises an inner liner (15), the inner liner (15) and the welding cap (14) are separated by a groove (16).

2. A method of manufacturing a valve according to claim 1, where there is a passage between the groove (16) and a inner cavity (10).

3. A method of manufacturing a valve according to any of the claims claim 1 to 2, where the welding cap end (18) is staggered compared to the inner liner end (17).

4. A method of manufacturing a valve according to any of the claims claim 1 to 3, where the upper part (5) comprises a guiding ring meeting the inner edge of the welding cap (14).

5. A method of manufacturing a valve according to any of the claims 1 to 4 where all parts of the housing (2) have a uniform thickness.

6. A method of manufacturing a valve according to any of the claims 1 to 5 where the depth of the welding seem is less than the thickness of the welding cap (14).

## Patentansprüche

1. Ein Verfahren zur Herstellung eines Ventils mit einem Gehäuse (2) und einem Oberteil (5), wobei das Gehäuse (2) durch Metallspritzgießen hergestellt wird und einen Schweißaufsatz (14) aufweist, und der Oberteil (5) mit dem Schweißaufsatz verschweißt ist, **dadurch gekennzeichnet, dass** das Gehäuse (2) eine innere Verkleidung (15) aufweist, die durch eine Nut (16) von dem Schweißaufsatz (14) getrennt ist.

2. Ein Verfahren zur Herstellung eines Ventils nach Anspruch 1, **dadurch gekennzeichnet, dass** eine Passage zwischen der Nut (16) und einem inneren Hohlraum (10) vorgesehen ist.

3. Ein Verfahren zur Herstellung eines Ventils nach jedem der Ansprüche 1 bis 2, **dadurch gekennzeichnet, dass** das Schweißaufsatzende (18) im Verhältnis zum inneren Verkleidungsende (17) abgestuft ist.

4. Ein Verfahren zur Herstellung eines Ventils nach jedem der Ansprüche 1 bis 3, **dadurch gekennzeichnet, dass** der Oberteil (5) einen Führungsring aufweist, der der Innenkante des Schweißaufsatzes (14) begegnet.

5. Ein Verfahren zur Herstellung eines Ventils nach jedem der Ansprüche 1 bis 4, **dadurch gekennzeichnet, dass** alle Teile des Gehäuses (2) die gleiche Dicke haben.

6. Ein Verfahren zur Herstellung eines Ventils nach jedem der Ansprüche 1 bis 5, **dadurch gekennzeichnet, dass** die Tiefe der Schweißnaht kleiner ist als die Dicke des Schweißaufsatzes (14).

## Revendications

1. Procédé pour fabriquer une soupape, la soupape comprenant un boîtier (2) et une partie supérieure (5), le boîtier (2) étant fabriqué par le moulage par injection du métal, le boîtier (2) comprend un bouchon de soudage (14), et la partie supérieure (5) est soudée au bouchon de soudage (14), **caractérisé en ce que** le boîtier (2) comprend un revêtement interne (15), le revêtement interne (15) et le bouchon de soudage (14) sont séparés par une rainure (16).

2. Procédé pour fabriquer une soupape selon la revendication 1, dans lequel il y a un passage entre la rainure (16) et une cavité interne (10).

3. Procédé pour fabriquer une soupape selon l'une quelconque des revendications 1 à 2, dans lequel l'extrémité du bouchon de soudage (18) est en quinconce par rapport à l'extrémité (17) du revêtement interne.

4. Procédé pour fabriquer une soupape selon l'une quelconque des revendications 1 à 3, dans lequel la partie supérieure (5) comprend une bague de guidage rencontrant le bord interne du bouchon de soudage (14).

5. Procédé pour fabriquer une soupape selon l'une quelconque des revendications 1 à 4, dans lequel toutes les parties du boîtier (2) ont une épaisseur uniforme.

6. Procédé pour fabriquer une soupape selon l'une quelconque des revendications 1 à 5, dans lequel la profondeur du cordon de soudure est inférieure à l'épaisseur du bouchon de soudage (14).
